# EUROPEAN PATENT SPECIFICATION

(11) **EP 3 388 294 B1**
(45) Date of publication and mention of the grant of the patent: **27.11.2019**
(21) Application number: 17165687.9
(22) Date of filing: 10.04.2017
(51) Int. Cl.: B60S 1/48

(54) **WINDSHIELD WASHER FLUID SUPPLY SYSTEM**
SYSTEM ZUR ZUFUHR EINER SCHEIBENREINIGUNGSFLÜSSIGKEIT
SYSTÈME D'ALIMENTATION EN FLUIDE DE LAVE-GLACE

(43) Date of publication of application: 17.10.2018
(73) Proprietor: Ford Otomotiv Sanayi Anonim Sirketi, 34885 Istanbul (TR)
(72) Inventor: Nogay, Ferit, 41900 Derince / KOCAELI (TR); Türker, Emre, 34755 Atasehir / ISTANBUL (TR); Durademir, Ayhan, 34840 MALTEPE/ISTANBUL (TR); Karahanci, Yezdan, 34882 Kartal/Istanbul (TR)
(74) Representative: Illing, Rolf

(56) References cited:
- KR-B1- 101 252 216
- US-B2- 8 820 334

## Description

The present invention relates in general to a system for supplying washer liquid to a windshield, and in particular to a system for providing washer liquid that is heated.

Systems for providing washer liquid for cleaning a windshield of a vehicle are known for many decades. Such systems typically comprise a reservoir for holding washer liquid, and a pump, and a set of nozzles mounted at a distance from the windshield for spraying washer liquid onto the windshield when the pump is activated.

Apart from cleaning a windshield from dirt and bugs, the washer system is also used at lower environmental temperatures (e.g. in winter) to remove ice or frost. Water is commonly used as the washer liquid, but (as is well known), water freezes below 0 °C, which is a problem, especially at cold start. While it is possible to add an amount of anti-freezing agent to the water, this solution is both expensive, and merely shifts the problem to a lower temperature (e.g. -10 °C) depending on the amount of anti-freeze agent being used. There is a need for windshield washer systems that operate well, even at lower temperatures, and optionally without requiring an anti-freeze agent.

US 8,820,334 B2 describes an apparatus for heating washer liquid using the heater provided in an air conditioning system of a vehicle, wherein cold washer liquid is fed through a heating pipe arranged in thermal contact with the heater of the air conditioning system. The heated washer liquid is temporarily stored in a separate reservoir and subsequently fed to a spray nozzle (assuming that the path to the spray nozzle is not obstructed by frozen washer liquid, which unfortunately is often the case at cold engine start at low environmental temperatures).

US 8,550,147 B2 describes a windshield washer fluid heater system, wherein a washer liquid is heated in a heating element using heat energy from engine coolant or electrical energy from an electrical heater or both.

US 6,711,776 B1 describes a windshield washer system using energy from friction brakes.

US 2006/0196448 A1 describes a tube with an electrical heater surrounding the tube for heating a fluid that flows through the tube.

US 6,032,324 A describes a windshield washer system with a wiper having an elongated fluid chamber.

There are also products available on the after-sales market, e.g. a system called "AlphaTherm Windshield Washer Heater", information of which can be found on the internet at the time of writing this document.

While known systems using heated liquid offer advantages over classical windshield defrosters using air blown to the windshield on the inside of a vehicle, the systems mentioned above do not work well when the nozzles or wipers are clogged by frozen washer liquid, for example water (or ice) with an insufficient amount of anti-freeze agent at temperatures below -18 °C, or water without anti-freeze agent at temperatures below -5 °C.

The present invention has the object to provide a windshield washer fluid system capable of providing heated washer fluid, and to a windshield washer fluid supply system as part of such system.

It is a particular object of the present invention to provide such a windshield washer fluid system and such a windshield washer fluid supply system that solves the problem of a clogged nozzle or a clogged wiper due to frozen washer liquid more quickly.

These objects are achieved by a windshield washer fluid supply system having the features of claim 1, and by a windshield washer fluid system having the features of claim 8. Further, particularly advantageous embodiments of the invention are disclosed in the dependent claims.

It should be noted that the individual features listed in the description below can be combined in any technically meaningful way with each other and show further embodiments of the invention. The description of the invention is additionally characterized and specified particularly in connection with the figures.

In an advantageous embodiment, the present invention discloses a windshield washer fluid supply system, comprising: a washer fluid reservoir for holding a washer fluid, a washer fluid pump connected to the washer fluid reservoir and configured for pumping washer fluid from the reservoir into a first supply duct, the first supply duct being connected to the washer fluid pump, a first multi-channel duct comprising at least one liquid channel for conducting washer fluid and at least one air channel for conducting heated air, the liquid channel and the air channel being separate from each other but in thermal contact with each other; a first adapter having a first input port for receiving washer fluid from the first supply duct, and having a second input port for receiving heated air from a second supply duct, and having an output port connected to said first multi-channel duct, the first adapter being configured for fluidly connecting the first input port to the at least one liquid channel for providing washer fluid to the first multi-channel duct, and being configured for fluidly connecting the second input port to the at least one air channel for providing heated air to the first multi-channel duct; the second supply duct having a downstream end connected to the second input port of the first adapter, and having an upstream end connectable to a HVAC system for receiving heated air from the HVAC system and for guiding said heated air to the first adapter.

It is an advantage of using the multi-channel duct as the heat exchanger for transferring heat from heated air towards the washer fluid, rather than providing extra tubing in the HVAC system. In this way, the HVAC system need not be changed and heated air can be provided only when needed, which is energy efficient.

According to a further advantageous embodiment of the present invention, the first multi-channel duct comprises at least two or at least three air channels.

According to a further advantageous embodiment of the present invention, the at least one liquid channel is made of copper or copper alloy or aluminum or aluminum alloy.

According to a further advantageous embodiment of the present invention, the first multi-channel duct comprises only one liquid channel and comprises at least three or at least six or at least eight air channels surrounding the liquid channel.

According to a further advantageous embodiment of the present invention, the first multi-channel duct comprises at least two or at least three liquid channels.

According to a further advantageous embodiment of the present invention, the first multi-channel duct consists of two concentric tubes with circular cross section, a ratio of the diameter of the inner tube and the diameter of the outer tube being a value in the range from 0.25 to 0.75.

According to a further advantageous embodiment of the present invention, the first multi-channel duct further comprises a sheath surrounding the at least one liquid channel and the at least one air channel, the sheath being made of an electrically and thermally insulating material.

In another advantageous embodiment, the present invention discloses a windshield washer fluid system, comprising: a windshield washer fluid supply system as described above; a second adapter having an input connected to the first multi-channel duct, and having an output connected to a first nozzle; the first nozzle fluidly connected to the at least one liquid channel of the first multi-channel duct, and being configured for spraying heated washer fluid on a windshield; a HVAC system connected to the second supply duct, and configured for providing heated air to the first adapter.

According to a further advantageous embodiment of the present invention, the windshield washer system further comprises: a second multi-channel duct operatively connected to the second adapter for passing washer fluid and for passing heated air; a third adapter connected to the second multi-channel duct, and configured for guiding washer fluid to a second nozzle; the second nozzle fluidly connected to the at least one liquid channel of the first multi-channel duct, and being configured for spraying heated washer fluid on the windshield.

Further features and advantages of the present invention will become apparent from the following description of non-limiting embodiments of the invention which will be explained below with reference to the drawing.
- FIG. 1: shows a windshield washer fluid system according to an embodiment of the present invention. It comprises a first adapter configured for receiving heated air from a HVAC system and for receiving washer fluid from a washer fluid reservoir and for providing said washer fluid and heated air to a first nozzle via a first multi-channel duct arranged between the first adapter and a second adapter (near the first nozzle).
- FIG. 2: shows a variant of the windshield washer fluid system of FIG. 1, further comprising a second nozzle and a second multi-channel duct arranged between the second adapter (near the first nozzle) and a third adapter (near the second nozzle).
- FIG. 3: shows the main components of the windshield washer fluid supply system according to embodiments of the present invention, as a subsystem of a windshield washer fluid system.
- FIG. 4: shows an example of a multi-channel duct as can be used in embodiments of the present invention, having one channel for guiding the washer fluid, and having eight channels for guiding heated air, arranged circumferentially with respect to the central channel.
- FIG. 5: shows another example of a multi-channel duct with seven channels having a hexagonal cross section, the central channel configured for guiding the washer fluid, the surrounding six channels configured for guiding heated air, as can be used in embodiments of the present invention.
- FIG. 6: shows another example of a multi-channel duct with two concentric tubes having a circular cross section, as can be used in embodiments of the present invention.
- FIG. 7: shows another example of a multi-channel duct, with three tubes having a circular cross section arranged inside an outer tube having a circular cross section, as can be used in embodiments of the present invention.

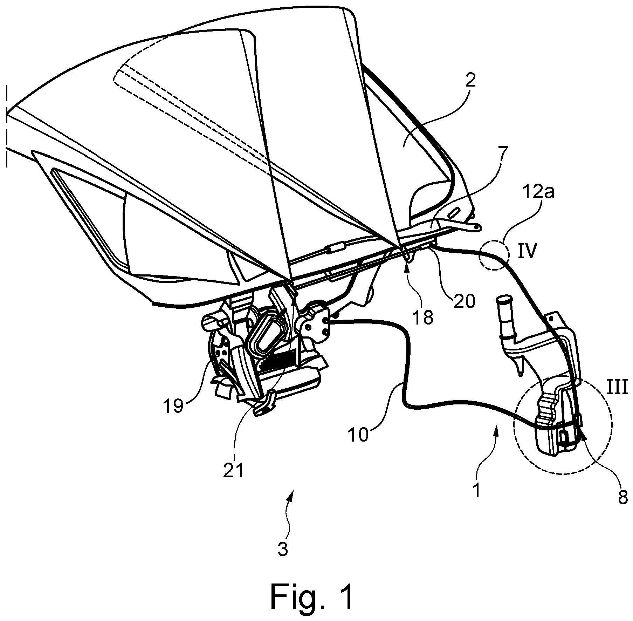

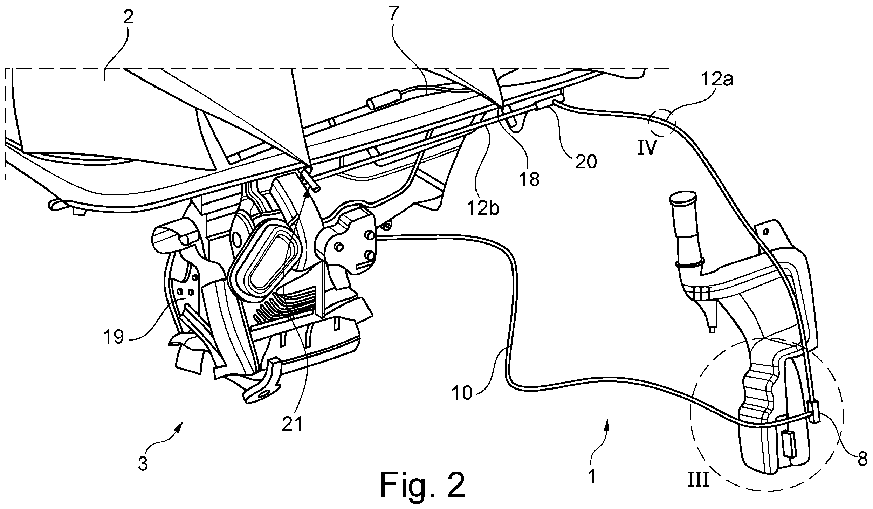

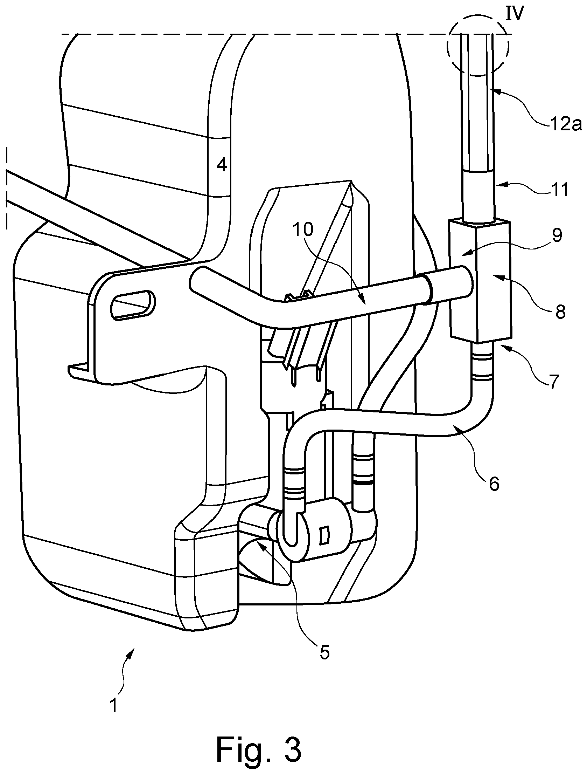

The present invention is related to a washer fluid supply system 1 (see FIG. 3) for supplying heated washer liquid to a windshield 2 (see FIG. 1 and FIG. 2), as a subsystem of a windshield washer fluid system 3 (see FIG. 1 and FIG. 2).

The invention is best explained starting from FIG. 3. FIG. 3 shows the subsystem 1, referred to herein as "windshield washer fluid supply system" comprising a washer fluid reservoir 4 for holding washer fluid, a washer fluid pump 5 for pumping washer fluid from the reservoir 4 into a supply duct 6 connected to a first input port 7 of a first adapter 8, the first adapter 8 having a second input port 9 for receiving heated air from a heated air supply duct 10, and having an output port 11 connected to a first multi-channel duct 12a.

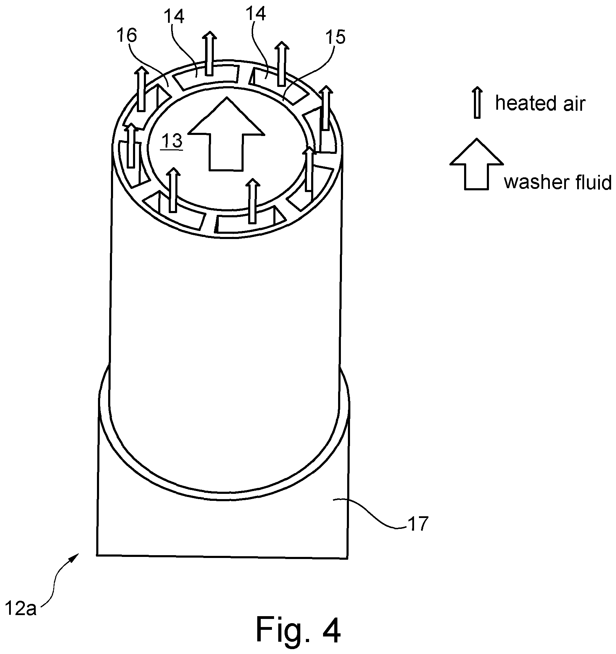

An example of a suitable multi-channel duct 12a as can be used in embodiments of the present invention is shown in FIG. 4. The multi-channel duct 12a of FIG. 4 comprises a plurality of nine parallel channels 13, 14. In the example shown in FIG. 4, the central channel 13 is configured for guiding the washer liquid and the other channels 14 are configured for guiding heated air for heating and/or defrosting the washer liquid inside the central channel 13. As can be seen, the channel 13 (for the washer fluid) is separated from the air channels 14 via a plurality of walls. These walls have a double purpose: to physically separate the washer fluid flowing in the channel 13 from the heated air flowing in the channels 14 and to exchange heat from the heated air to the washer fluid. The washer fluid is typically water with or without a suitable amount of anti-freeze agent (e.g. an alcohol). The inner wall 15 separating the washer fluid channel 13 from the air channels 14 is preferably made of a material with a high thermal conductivity, such as copper or aluminum. The air channels 14 surround the washer fluid channel 13 and provide mechanical protection to the inner channel 13, thus reducing the risk of leakage and of electrical hazards. The air channels 14 may be individual channels, but that is not absolutely required, and the air channels may be interconnected. In FIG. 4 the air channels 14 are individual channels separated from each other by spacing means 16 extending in radial direction. The spacing means 16 and outer channels 14 are encapsulated by a sheath or enclosure 17 made of an electrically and thermally insulating material.

It can be understood from FIG. 4 that, even if the washer fluid inside the inner channel 13 of the multi-channel duct 12a would be frozen at motor start, and thus cannot move from the washer reservoir 4 to the first nozzle 18 (see FIG. 1), heated air can still flow through the outer channels 14 of the multi-channel duct 12a unhindered. This heated air will quickly heat the frozen washer fluid which is trapped inside the inner channel 13, which will defrost and become liquid, so that it can be sprayed via the first nozzle 18 on the windshield 2. The ability to defrost frozen washer liquid is one of the major advantages of the present invention.

Referring to FIG. 1, the subsystem 1 is shown on the right side of the figure. It can be understood that, during operation, heated air is provided by the HVAC system 19 to the second input port 9 (see FIG. 3) of the first adapter 8 via the heated air supply duct 10. It can also be seen (in FIG. 1) that the multi-channel duct 12a provides the washer fluid from the first adapter 8 to a second adapter 20 in close vicinity of the first spray nozzle 18. The second adapter 20 is connected to the first multi-channel duct 12a and is configured for guiding washer fluid from the washer fluid channel 13 to the first nozzle 18. During its movement from the first adapter 8 to the second adapter 20, heat energy will be transferred from the heated air flowing through the air channels 14 to the washer liquid in the washer fluid channel 13. By the time the washer fluid arrives at the second adapter 20 nearby the first nozzle 18, its temperature will be increased, so that heated washer fluid will be sprayed onto the windshield 2.

The system 3 may further comprise a valve (not shown) for controlling the flow of air through the heated air supply duct 10, if so desired.

The system 3 may further comprise a second nozzle 21, wherein in the system 3 of FIG. 1 the first nozzle 18 and the second nozzle 21 are fluidly connected to each other, but without using a multi-channel duct like the multi-channel duct 12a used to fluidly connect output port 11 of the first adapter 8 to the second adapter 20.

FIG. 2 shows a variant of the windshield washer fluid system of FIG. 1, further comprising a second nozzle 21 and a second multi-channel duct 12b arranged between the second adapter 20 (located near the first nozzle 18) and a third adapter (not shown, but located near the second nozzle 21). The second multi-channel duct 12b may have the same or a similar construction as the first multi-channel duct 12a. The third adapter is connected to the second multi-channel duct 12b and is configured for guiding washer fluid from the washer fluid channel 13 thereof to the second nozzle 21. In this embodiment, the second adapter 20 is not only configured for providing washer fluid to the first nozzle 18, but also for passing a portion of the washer fluid to a washer fluid channel 13 of the second multi-channel duct 12b and for passing heated air from the air channels 14 of the first multi-channel duct 12a to air channels 14 of the second multi-channel duct 12b.

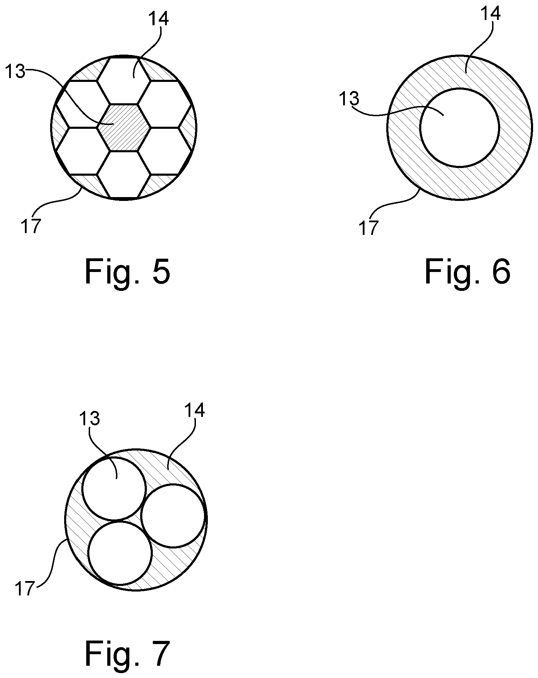

FIG. 5 shows another example of a multi-channel duct, as can be used in embodiments of the present invention. This duct has seven channels, each having a hexagonal cross section. The channels are arranged as a honeycomb. The central channel 13 is used for conducting the washer fluid. The surrounding channels 14 are used for transporting heated air for defrosting and/or heating the washer fluid. Preferably a sheath 17 made of an electrically and thermally insulating material (indicated by a thick black circle in the drawing) surrounds the seven channels 13, 14.

FIG. 6 shows another example of a multi-channel duct, as can be used in embodiments of the present invention. This duct is formed by two concentric cylindrical tubes, the inner cylindrical tube forming channel 13 configured for conducting the washer fluid, the outer cylindrical tube forming channel 14 configured for guiding heated air. The inner cylindrical tube is preferably made of a material with a relatively high thermal conductance, such as for example copper or aluminum. There may be spacing means between the inner and outer tube, but that is not absolutely required. In this case, the outer cylindrical tube need not be made of a thermally conductive material, and in fact, preferably it is made of a thermally insulating material. Optionally an additional sheath 17 made of an electrically and thermally insulating material (indicated by a thick black circle in the drawing) surrounds the outer cylindrical tube for providing additional insulation.

FIG. 7 shows another example of a multi-channel duct, with three cylindrical tubes arranged inside a single outer cylindrical tube. The inner cylindrical tubes forming three channels 13 for guiding the washer fluid are preferably made of a material with a relatively high thermal conductance, such as for example copper or aluminum. The outer tube forming channel 14 for guiding the heated air is preferably made of an electrically and thermally insulating material. This embodiment offers the advantage that the inner tubes 13 are automatically spaced apart and that no additional spacers are required.

Comparison of the examples of FIG. 4 to FIG. 6 shows that the number of channels 13 configured for guiding washer fluid can be only one or can be more than one, and that the number of channels 14 for guiding heated air can be only one or can be more than one.

### REFERENCE NUMERALS

- 1:: subsystem,
- 2:: windshield,
- 3:: windshield washer fluid system,
- 4:: washer fluid reservoir,
- 5:: washer fluid pump,
- 6:: supply duct,
- 7:: first input port,
- 8:: first adapter,
- 9:: second input port,
- 10:: supply duct (from HVAC) for heated air,
- 11:: output port,
- 12a:: first multi-channel duct,
- 12b:: second multi-channel duct,
- 13:: channel for washer fluid,
- 14:: channel for heated air,
- 15:: inner wall,
- 16:: spacing means,
- 17:: sheath or enclosure,
- 18:: first nozzle,
- 19:: HVAC system,
- 20:: second adapter,
- 21:: second nozzle

## Claims

1. A windshield washer fluid supply system (1), comprising:
- a washer fluid reservoir (4) for holding a washer fluid,
- a washer fluid pump (5) connected to the washer fluid reservoir (4) and configured for pumping washer fluid from the reservoir into a first supply duct (6),
- the first supply duct (6) being connected to the washer fluid pump (5),
**characterised in that** the system further comprises:
- a first multi-channel duct (12a) comprising at least one liquid channel (13) for conducting washer fluid and at least one air channel (14) for conducting heated air, the liquid channel (13) and the air channel (14) being separate from each other but in thermal contact with each other;
- a first adapter (8) having a first input port (7) for receiving washer fluid from the first supply duct (6), and having a second input port (9) for receiving heated air from a second supply duct (10), and having an output port (11) connected to said first multi-channel duct (12a),
the first adapter (8) being configured for fluidly connecting the first input port (7) to the at least one liquid channel (13) for providing washer fluid to the first multi-channel duct (12a), and being configured for fluidly connecting the second input port (9) to the at least one air channel (14) for providing heated air to the first multi-channel duct (12a);
the second supply duct (10) having a downstream end connected to the second input port (9) of the first adapter (8), and having an upstream end connectable to a HVAC system (19) for receiving heated air from the HVAC system and for guiding said heated air to the first adapter (8).

2. The windshield washer fluid supply system (1) according to claim 1, wherein the first multi-channel duct (12a) comprises at least two or at least three air channels (14).

3. The windshield washer fluid supply system (1) according to any of the previous claims, wherein the at least one liquid channel (13) is made of copper or copper alloy or aluminum or aluminum alloy.

4. The windshield washer fluid supply system (1) according to any of the previous claims, wherein the first multi-channel duct (12a) comprises only one liquid channel (13) and comprises at least three or at least six or at least eight air channels (14) surrounding the liquid channel (13).

5. The windshield washer fluid supply system (1) according to any of the claims 1 to 3, wherein the first multi-channel duct (12a) comprises at least two or at least three liquid channels (13).

6. The windshield washer fluid supply system (1) according to claim 1, wherein the first multi-channel duct (12a) consists of two concentric tubes with circular cross section, a ratio of the diameter of the inner tube and the diameter of the outer tube being a value in the range from 0.25 to 0.75.

7. The windshield washer fluid supply system (1) according to any of the previous claims, wherein the first multi-channel duct (12a) further comprises a sheath (17) surrounding the at least one liquid channel (13) and the at least one air channel (14), the sheath (17) being made of an electrically and thermally insulating material.

8. A windshield washer fluid system (3) comprising:
- a windshield washer fluid supply system (1) according to any of the previous claims;
- a second adapter (20) having an input connected to the first multi-channel duct (12a) and having an output connected to a first nozzle (18);
- the first nozzle (18) fluidly connected to the at least one liquid channel (13) of the first multi-channel duct (12a) and being configured for spraying heated washer fluid on a windshield (2);
- a HVAC system (19) connected to the second supply duct (10) and being configured for providing heated air to the first adapter (8).

9. The windshield washer system (3) of claim 8, further comprising:
- a second multi-channel duct (12b) operatively connected to the second adapter (20) for passing washer fluid and for passing heated air;
- a third adapter connected to the second multi-channel duct (12b) and being configured for guiding washer fluid to a second nozzle (21);
- the second nozzle (21) fluidly connected to the at least one liquid channel (13) of the second multi-channel duct (12b) and being configured for spraying heated washer fluid on the windshield (2).

## Patentansprüche

1. Anlage zur Zufuhr einer Scheibenwaschflüssigkeit (1), umfassend:
- einen Waschflüssigkeitsbehälter (4), der eine Waschflüssigkeit enthält,
- eine Waschflüssigkeitspumpe (5), die mit dem Waschflüssigkeitsbehälter (4) verbunden und dazu ausgelegt ist, Waschflüssigkeit aus dem Behälter in eine erste Zufuhrleitung (6) zu pumpen,
- wobei die erste Zufuhrleitung (6) mit der Waschflüssigkeitspumpe (5) verbunden ist,
**dadurch gekennzeichnet, dass** die Anlage ferner Folgendes umfasst:
- eine erste Mehrkanalleitung (12a), die wenigstens einen Flüssigkeitskanal (13) zum Leiten von Waschflüssigkeit und wenigstens einen Luftkanal (14) zum Leiten von Heißluft umfasst, wobei der Flüssigkeitskanal (13) und der Luftkanal (14) voneinander getrennt sind, sich aber in thermischem Kontakt zueinander befinden,
- einen ersten Adapter (8), der eine erste Eingangsöffnung (7) zum Aufnehmen von Waschflüssigkeit aus der ersten Zufuhrleitung (6) und eine zweite Eingangsöffnung (9) zum Aufnehmen von Heißluft aus einer zweiten Zufuhrleitung (10) aufweist und eine Ausgangsöffnung (11), die mit der ersten Mehrkanalleitung (12a) verbunden ist, aufweist,
wobei der erste Adapter (8) dazu ausgelegt ist, die erste Eingangsöffnung (7) fluidisch mit dem wenigstens einen Flüssigkeitskanal (13) zu verbinden, um Waschflüssigkeit zu der ersten Mehrkanalleitung (12a) zu leiten, und dazu ausgelegt ist, die zweite Eingangsöffnung (9) fluidisch mit dem wenigstens einen Luftkanal (14) zu verbinden, um Heißluft zu der ersten Mehrkanalleitung (12a) zu leiten,
wobei die zweite Zufuhrleitung (10) ein stromabwärts gelegenes Ende aufweist, das mit der zweiten Eingangsöffnung (9) des ersten Adapters (9) verbunden ist, und ein stromaufwärts gelegenes Ende aufweist, das mit einer HLK-Anlage (19) verbindbar ist, um Heißluft aus der HLK-Anlage aufzunehmen und die Heißluft zu dem ersten Adapter (8) zu führen.

2. Anlage zur Zufuhr einer Scheibenwaschflüssigkeit (1) nach Anspruch 1, wobei die erste Mehrkanalleitung (12a) wenigstens zwei oder wenigstens drei Luftkanäle (14) umfasst.

3. Anlage zur Zufuhr einer Scheibenwaschflüssigkeit (1) nach einem der vorhergehenden Ansprüche, wobei der wenigstens eine Flüssigkeitskanal (13) aus Kupfer oder einer Kupferlegierung oder Aluminium oder einer Aluminiumlegierung hergestellt ist.

4. Anlage zur Zufuhr einer Scheibenwaschflüssigkeit (1) nach einem der vorhergehenden Ansprüche, wobei die erste Mehrkanalleitung (12a) nur einen Flüssigkeitskanal (13) umfasst und wenigstens drei oder wenigstens sechs oder wenigstens acht Luftkanäle (14) umfasst, die den Flüssigkeitskanal (13) umgeben.

5. Anlage zur Zufuhr einer Scheibenwaschflüssigkeit (1) nach einem der Ansprüche 1 bis 3, wobei die erste Mehrkanalleitung (12a) wenigstens zwei oder wenigstens drei Flüssigkeitskanäle (13) umfasst.

6. Anlage zur Zufuhr einer Scheibenwaschflüssigkeit (1) nach Anspruch 1, wobei die erste Mehrkanalleitung (12a) aus zwei konzentrischen Röhren mit einem kreisförmigen Querschnitt besteht, wobei ein Verhältnis des Durchmessers der inneren Röhre zu dem Durchmesser der äußeren Röhre ein Wert ist, der im Bereich von 0,25 bis 0,75 liegt.

7. Anlage zur Zufuhr einer Scheibenwaschflüssigkeit (1) nach einem der vorhergehenden Ansprüche, wobei die erste Mehrkanalleitung (12a) ferner eine Ummantelung (17) umfasst, die den wenigstens einen Flüssigkeitskanal (13) und den wenigstens einen Luftkanal (14) umgibt, wobei die Ummantelung (17) aus einem elektrisch und thermisch isolierenden Material hergestellt ist.

8. Scheibenwaschflüssigkeitsanlage (3), umfassend:
- eine Anlage zur Zufuhr einer Scheibenwaschflüssigkeit (1) nach einem der vorhergehenden Ansprüche,
- einen zweiten Adapter (20), der einen Eingang aufweist, der mit der ersten Mehrkanalleitung (12a) verbunden ist, und einen Ausgang aufweist, der mit einer ersten Düse (18) verbunden ist,
- wobei die erste Düse (18) fluidisch mit dem wenigstens einen Flüssigkeitskanal (13) der ersten Mehrkanalleitung (12a) verbunden und dazu ausgelegt ist, erwärmte Waschflüssigkeit auf eine Windschutzscheibe (2) zu sprühen,
- eine HLK-Anlage (19), die mit der zweiten Zufuhrleitung (10) verbunden und dazu ausgelegt ist, dem ersten Adapter (8) Heißluft zuzuführen.

9. Scheibenwaschanlage (3) nach Anspruch 8, ferner umfassend:
- eine zweite Mehrkanalleitung (12b), die mit dem zweiten Adapter (20) wirkverbunden ist, um Waschflüssigkeit zu führen und um Heißluft zu führen,
- einen dritten Adapter, der mit der zweiten Mehrkanalleitung (12b) verbunden und dazu ausgelegt ist, Waschflüssigkeit zu einer zweiten Düse (21) zu führen,
- wobei die zweite Düse (21) fluidisch mit dem wenigstens einen Flüssigkeitskanal (13) der zweiten Mehrkanalleitung (12b) verbunden und dazu ausgelegt ist, erwärmte Waschflüssigkeit auf die Windschutzscheibe (2) zu sprühen.

## Revendications

1. Système d'alimentation en liquide lave-glace (1), comprenant :
- un réservoir de liquide lave-glace (4) pour contenir un liquide lave-glace,
- une pompe de liquide lave-glace (5) raccordée au réservoir de liquide lave-glace (4) et configurée pour pomper un liquide lave-glace, depuis le réservoir jusque dans une première conduite d'alimentation (6),
- la première conduite d'alimentation (6) étant raccordée à la pompe de liquide lave-glace (5),
**caractérisé en ce que** le système comprend en outre :
- une première conduite multi-canal (12a) comprenant au moins un canal de liquide (13), pour conduire le liquide lave-glace, et au moins un canal d'air (14), pour conduire de l'air chauffé, le canal de liquide (13) et le canal d'air (14) étant séparés l'un de l'autre mais en contact thermique l'un avec l'autre ;
- un premier adaptateur (8) ayant un premier orifice d'entrée (7) pour recevoir le liquide lave-glace à partir de la première conduite d'alimentation (6), et ayant un second orifice d'entrée (9) pour recevoir de l'air chauffé à partir d'une seconde conduite d'alimentation (10), et ayant un orifice de sortie (11) raccordé à ladite première conduite multi-canal (12a),
le premier adaptateur (8) étant configuré pour raccorder fluidiquement le premier orifice d'entrée (7) à l'au moins un canal de liquide (13) pour fournir le liquide lave-glace à la première conduite multi-canal (12a), et étant configuré pour raccorder fluidiquement le second orifice d'entrée (9) à l'au moins un canal d'air (14) pour fournir l'air chauffé à la première conduite multi-canal (12a) ;
la seconde conduite d'alimentation (10) ayant une extrémité en aval raccordée au second orifice d'entrée (9) du premier adaptateur (8), et ayant une extrémité en amont raccordable à un système HVAC (19) pour recevoir l'air chauffé à partir du système HVAC et pour guider ledit air chauffé jusqu'au premier adaptateur (8).

2. Système d'alimentation en liquide lave-glace (1) selon la revendication 1, dans lequel la première conduite multi-canal (12a) comprend au moins deux ou au moins trois canaux d'air (14).

3. Système d'alimentation en liquide lave-glace (1) selon l'une quelconque des revendications précédentes, dans lequel l'au moins un canal de liquide (13) est fait de cuivre ou d'alliage de cuivre ou d'aluminium ou d'alliage d'aluminium.

4. Système d'alimentation en liquide lave-glace (1) selon l'une quelconque des revendications précédentes, dans lequel la première conduite multi-canal (12a) comprend seulement un canal de liquide (13) et comprend au moins trois ou au moins six ou au moins huit canaux d'air (14) entourant le canal de liquide (13).

5. Système d'alimentation en liquide lave-glace (1) selon l'une quelconque des revendications 1 à 3, dans lequel la première conduite multi-canal (12a) comprend au moins deux ou au moins trois canaux de liquide (13).

6. Système d'alimentation en liquide lave-glace (1) selon la revendication 1, dans lequel la première conduite multi-canal (12a) est constituée de deux tubes concentriques avec une section transversale circulaire, un rapport du diamètre du tube intérieur et du diamètre du tube extérieur étant une valeur dans la plage de 0,25 à 0,75.

7. Système d'alimentation en liquide lave-glace (1) selon l'une quelconque des revendications précédentes, dans lequel la première conduite multi-canal (12a) comprend en outre une gaine (17) entourant l'au moins un canal de liquide (13) et l'au moins un canal d'air (14), la gaine (17) étant faite d'un matériau électriquement et thermiquement isolant.

8. Système de liquide lave-glace (3), comprenant :
- un système d'alimentation en liquide lave-glace (1) selon l'une quelconque des revendications précédentes ;
- un deuxième adaptateur (20) ayant une entrée raccordée à la première conduite multi-canal (12a) et ayant une sortie raccordée à une première buse (18) ;
- la première buse (18) fluidiquement raccordée à l'au moins un canal de liquide (13) de la première conduite multi-canal (12a) et configurée pour pulvériser un liquide lave-glace chauffé sur un pare-brise (2) ;
- un système HVAC (19) raccordé à la seconde conduite d'alimentation (10) et configuré pour fournir de l'air chauffé au premier adaptateur (8).

9. Système de lave-glace (3) selon la revendication 8, comprenant en outre :
- une seconde conduite multi-canal (12b) fonctionnellement raccordée au deuxième adaptateur (20) pour faire passer un liquide lave-glace et pour faire passer de l'air chauffé ;
- un troisième adaptateur raccordé à la seconde conduite multi-canal (12b) et configuré pour guider un liquide lave-glace jusqu'à une seconde buse (21) ;
- la seconde buse (21) fluidiquement raccordée à l'au moins un canal de liquide (13) de la seconde conduite multi-canal (12b) et configurée pour pulvériser le liquide lave-glace chauffé sur le pare-brise (2).
